# EUROPÄISCHE PATENTSCHRIFT

(11) **EP 2 275 703 B1**
(45) Veröffentlichungstag und Bekanntmachung des Hinweises auf die Patenterteilung: **03.04.2013**
(21) Anmeldenummer: 10190083.5
(22) Anmeldetag: 28.05.2009
(51) Int. Cl.: F16F 9/05, F16F 9/512

(54) **Luftfeder mit integriertem Steuerventil**
Pneumatic spring with integrated control valve
Ressort pneumatique doté d'une soupape de commande intégrée

(30) Priorität: 05.06.2008 DE 102008002222
(43) Veröffentlichungstag der Anmeldung: 19.01.2011
(62) Teilanmeldung aus: 09161325.7
(73) Patentinhaber: ZF Friedrichshafen AG, 88038 Friedrichshafen (DE)
(72) Erfinder: Memmel, Alfred, 97453, Schonungen (DE); Friedrich, Harald, 97535, Wasserlosen (DE); Markert-Hess, Christine, 97502, Euerbach (DE)

(56) Entgegenhaltungen:
- DE-A1- 4 409 252
- DE-A1- 10 003 045
- DE-A1-102004 012 881
- DE-C1- 10 200 553
- DE-U1- 20 219 883
- US-A1- 2002 113 463
- US-B1- 6 332 624

## Beschreibung

Die Erfindung betrifft eine Luftfeder mit integriertem Steuerventil gemäß dem Oberbegriff von Patentanspruch 1.

Aus der gattungsbildenden DE 102 00 553 C1 ist eine Luftfeder gemäß der Figur 1 bekannt. Die Luftfeder 1 umfasst ein Abrollrohr 3, an dem endseitig ein Rollbalg 5 fixiert ist. Das andere Ende des Rollbalgs ist mit einer Kappe 7 verbunden, die wiederum an einer Kolbenstange 9 eines Schwingungsdämpfers 11 befestigt ist. An einem äußeren Zylinder 13 des Schwingungsdämpfers 11 stützt sich axial und radial das Abrollrohr 3 ab.

Das Abrollrohr 3 verfügt über eine trichterförmige Öffnung, in der neben dem Zylinder 13 eine Feder 15 angeordnet ist, die auf ein axial bewegliches Steuerelement 17 wirkt, an dem endseitig Kraftübertragungsbauteil 19 befestigt ist. Zwischen dem Kraftübertragungsteil 19 und der Kappe 7 kann entweder eine zweite Feder 21 verspannt sein oder das Kraftübertragungsteil 19 ist direkt mit der Kappe 7 verbunden.

Bei einer Luftfeder mit einer zweiten Feder wird die maximale Ausfahrposition des Steuerelements von einem Axialanschlag 23 bestimmt, der sich an einem Ringgehäuse 25 innerhalb des Abrollrohrs 3 abstützt. Das Ringgehäuse 25, das auch ein Steuerventil 27 zur Niveauregulierung eines Fahrwerks oder auch einer Fahrzeugkabine aufnimmt, wird über einen topfförmigen Befestigungsring 29, der eine Durchgangsöffnung für das Ringgehäuse 25 aufweist, axial mit dem Abrollrohr 3 verschraubt. Das Kraftübertragungsbauteil 19 kann erst befestigt werden, wenn das Steuerelement 17 in das Ringgehäuse 25 eingeschoben ist, da der Axialanschlag 23 eine nachträgliche Montage verhindert.

Die beschriebene Bauweise der Luftfeder, insbesondere die komplexen Bauteile für die Steuerfunktion, beeinflussen in hohem Maß die Herstellungskosten, so dass die Aufgabe darin zu sehen ist, bei vergleichbarer Funktionalität einen Kostenvorteil zu erreichen.

Erfindungsgemäß wird die Aufgabe dadurch gelöst, dass der Axialanschlag für das Steuerelement von mindestens einem radial beweglichen Element gebildet wird.

Das radial bewegliche Element ermöglicht die axiale Montage des Steuerelements bei schon montiertem Ringgehäuse, indem es einfach in das Ringgehäuse eingedrückt wird.

Dazu weist das Steuerelement mindestens einen radial elastischen hakenförmigen Anschlag auf. Am Ringgehäuse kann sich der hakenförmige Anschlag axial wie bisher bekannt abstützen.

In weiterer vorteilhafter Ausgestaltung ist der hakenförmige Anschlag des Steuerelements aus der Mantelfläche seines Rohrkörpers freigeschnitten. Mehrere Anschläge am Umfang verteilt verhindern eine Schiefstellung des Steuerelements.

Ein wesentlicher Kostenvorteil wird dadurch erreicht, dass das Kraftübertragungsbauteil und das Steuerelement einstückig ausgeführt sind.

Anhand der folgenden Figurenbeschreibung soll die Erfindung näher erläutert werden:
Es zeigt:

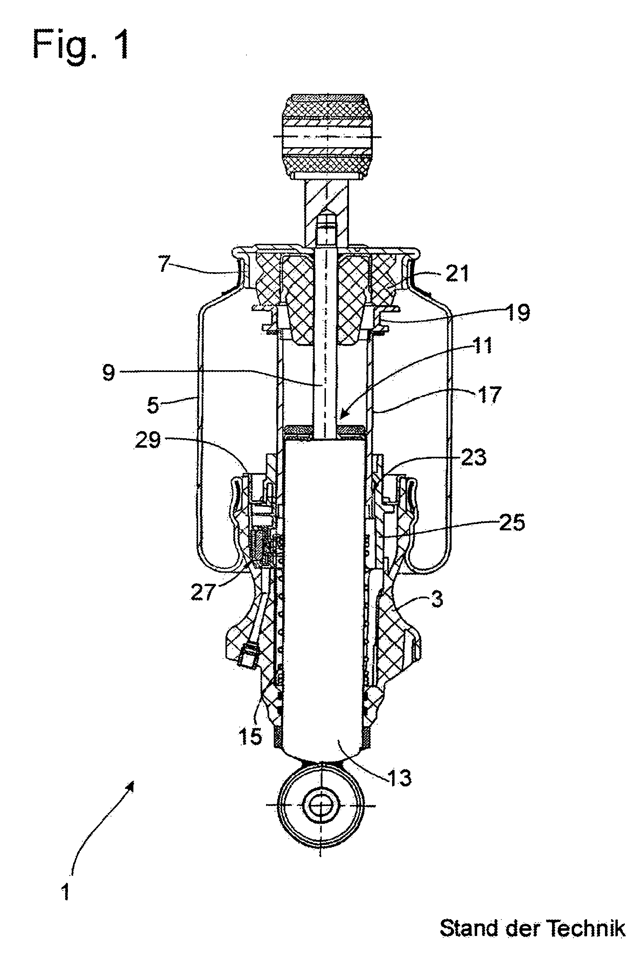

   - Fig. 1: Luftfeder, wie aus dem Stand der Technik bekannt
   - Fig. 2: Steuerelement als Einzelteil
   - Fig. 3: Abrollrohr mit Ringgehäuse und Steuerelement als Einzelteil
   - Fig. 4: Detaildarstellung zur Fig. 3
   - Fig. 5: Ringgehäuse als Einzelteil
   - Fig. 6: Abrollrohr mit Innenansicht
   - Fig. 7 u. 8: Luftfeder in Schnittdarstellung im Bereich der Rollbalgbefestigung

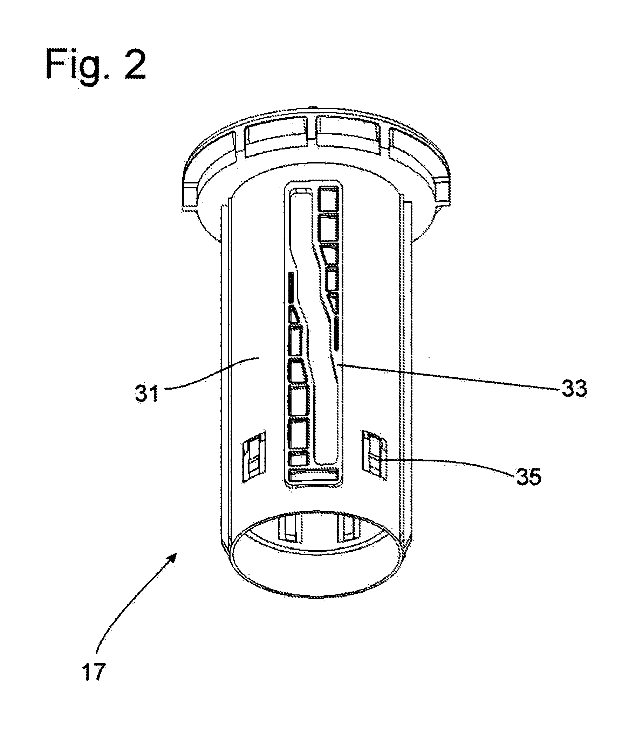

Die Fig. 2 zeigt das Steuerelement 17 als Einzelteil. Das Steuerelement 17 umfasst einen Rohrkörper 31 mit einer Führungsbahn 33, in die ein Übertragungselement des Steuerventils 27 eingreift, wobei hubabhängiger Versatz innerhalb der Führungsbahn in eine Schwenkbewegung umgesetzt wird, die wiederum die Schaltpositionen des Steuerventils 27 bestimmen.

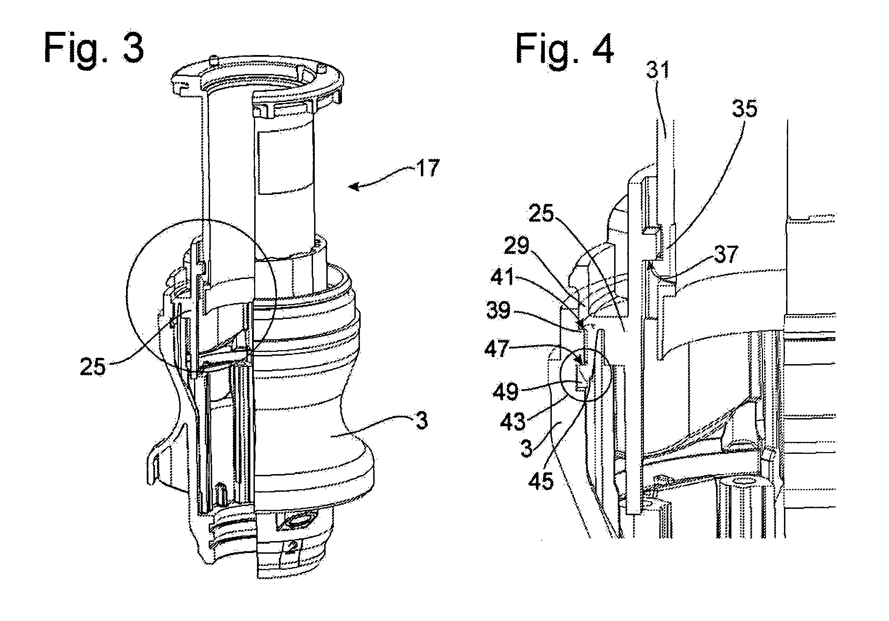

Das Steuerelement 17 besteht bevorzugt aus Kunststoff und ist einstückig mit dem Kraftübertragungselement 19 ausgeführt. In der Mantelfläche des Rohrkörpers 31 ist mindestens ein hakenförmiger Anschlag 35 freigeschnitten, so dass der Anschlag 35 radialelastisch ist. In der Zusammenschau mit den Fig. 3 und 4 wird die im Vergleich zum Stand der Technik vereinfachte Montage deutlich. Das Steuerelement 17 kann bei bereits montiertem Ringgehäuse 25 in das Ringgehäuse 25 eingeschoben werden, da der Axialanschlag 35 für das Steuerelement 17 von einem radial beweglichen Element gebildet wird und sich bei der Montage radial nach außen bewegen lässt, um einen Rücksprung 37 an der Innenwandung des Ringgehäuses 25 hintergreifen zu können.

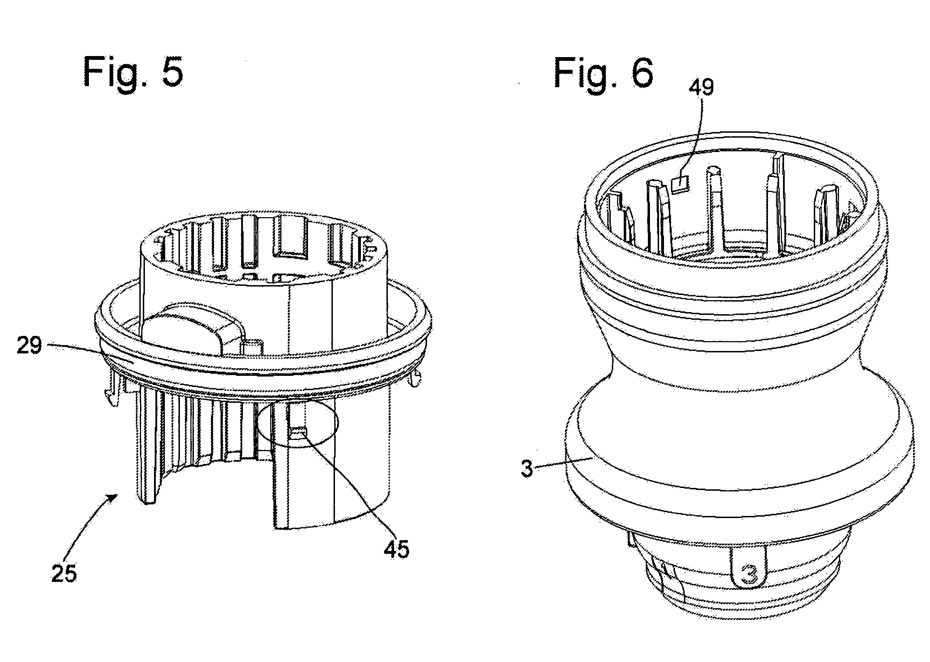

Die Figuren 5 und 6 zeigen einen weiteren von der Ausgestaltung des Steuerelements 17 unabhängigen Lösungsansatz für die Vereinfachung der Luftfeder 1. Zum einen weist das Ringgehäuse 25, das ebenfalls aus Kunststoff besteht, einen integrierten Befestigungsring 29 auf. Dieser Befestigungsring 29 stützt sich, wie die Fig. 3 und 4 zeigen, auf einer Schulter 39 des Abrollrohrs 3 ab. Zu Verhinderung einer Leckage trägt der Befestigungsring 29 eine in Richtung der Schulter 39 weisende Dichtung 41. Die Dichtung kann einteilig mit dem Befestigungsring ausgeführt sein, indem sie z. B von einem umlaufenden Wulst des Befestigungsrings gebildet wird.

Auch das Ringgehäuse 25 ist mittels einer Rastverbindung 43 am Abrollrohr 3 fixiert. Die Rastverbindung wird von einer Anzahl von Rasthaken 45 gebildet, die sich an einem radialen Absatz 47 abstützen, der innenseitig am Abrollrohr 3 ausgeführt ist. Der Absatz muss nicht unbedingt von einem umlaufenden Ringsteg gebildet werden, sondern kann, wie die Figur 4 zeigt, auch in Form von Taschen 49 realisiert sein. Das Ringgehäuse kann durch einfaches Einstecken in das Abrollrohr 3 montiert werden, ohne dass eine weitere Befestigungsmittel, z. B. Schrauben, notwendig sind.

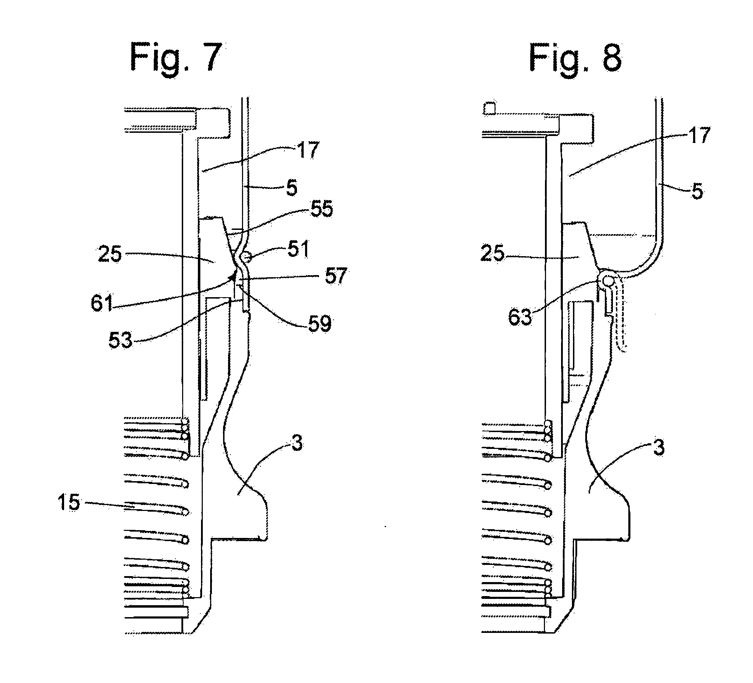

Mit der Fig. 7 und 8 soll noch ein weiterer Vorteil beschrieben werden. Der Rollbalg 5 wird im drucklosen Zustand von einem Klemmring 51, der einen kleineren Innendurchmesser aufweist als eine radiale Zentrierfläche 53 des Abrollrohres 3, auf einen Konusbereich 55 des Ringgehäuses 25 vorgespannt. Dieser Konusbereich 55 erweitert sich in Richtung einer Nut 57, die von einer Radialfläche 59 des Abrollrohrs 3 und einem Rücksprung 61 an der Unterseite des Konusbereichs 55 gebildet wird. Bei einer Befüllung der Luftfeder gleitet der Klemmring 51 am Konusbereich 55 in Richtung der Nut 57 und rastet dort zusammen mit einem Klemmabschnitt 63 des Rollbalgs 5 ein. Der Druck in der Luftfeder sorgt für eine Faltenbildung, die den Rollbalg druckdicht am Abrollrohr 3 hält. Die Fixierkraft des Rollbalgs erfolgt druckabhängig, wobei über den Klemmabschnitt 63 auch zusätzlich das Ringgehäuse 25 fixiert wird. Insgesamt wird nicht nur eine vereinfachte Montage, sondern auch noch eine Funktionsverbesserung erreicht.

### Bezugszeichenliste

- Luftfeder: 1
- Abrollrohr: 3
- Rollbalg: 5
- Kappe: 7
- Kolbenstange: 9
- Schwingungsdämpfer: 11
- Zylinder: 13
- Feder: 15
- Steuerelement: 17
- Kraftübertragungsbauteil: 19
- zweite Feder: 21
- Axialanschlag: 23
- Ringgehäuse: 25
- Steuerventil: 27
- Befestigungsring: 29
- Rohrkörper: 31

- Führungsbahn: 33
- hakenförmiger Anschlag: 35
- Rücksprung: 37
- Schulter: 39
- Dichtung: 41
- Rastverbindung: 43
- Rasthaken: 45
- Absatz: 47
- Taschen: 49
- Klemmring: 51
- Zentrierfläche: 53
- Konusbereich: 55
- Nut: 57
- Radialfläche: 59
- Rücksprung: 61
- Klemmabschnitt: 63

## Patentansprüche

1. Luftfeder (1) mit integriertem Steuerventil (27), umfassend ein Abrollrohr (3), an dem ein Rollbalg (5) befestigt ist, wobei das Abrollrohr (3) ein axial bewegliches Steuerelement (17) aufnimmt, das an seinem einen Ende ein Kraftübertragungsbauteil (19) und an seinem anderen Ende einen Axialanschlag (23) zur Begrenzung der Axialbewegung aufweist, wobei sich der Axialanschlag (23) an einem Ringgehäuse (25) abstützt, das wiederum über Befestigungsmittel mit dem Abrollrohr (3) verbunden ist,
**dadurch gekennzeichnet,**
**dass** der Axialanschlag (23) für das Steuerelements (17) von mindestens einem radial beweglichen Element (35) gebildet wird.

2. Luftfeder nach Anspruch 1,
**dadurch gekennzeichnet,**
**dass** das Steuerelement (17) mindestens einen radial elastischen hakenförmigen Anschlag (35) aufweist.

3. Luftfeder nach Anspruch 2,
**dadurch gekennzeichnet,**
**dass** der hakenförmige Anschlag (35) des Steuerelements (17) aus der Mantelfläche seines Rohrkörpers (31) freigeschnitten ist.

4. Luftfeder nach Anspruch 1,
**dadurch gekennzeichnet,**
**dass** das Kraftübertragungsbauteil (19) und das Steuerelement (17) einstückig ausgeführt sind.

## Claims

1. Pneumatic spring (1) with integrated control valve (27), comprising a rolling tube (3) to which a concertina (5) is fastened, the rolling tube (3) receiving an axially movable control element (17) which has at one end a force transmission component (19) and at its other end an axial stop (23) for limiting the axial movement, the axial stop (23) being supported on an annular housing (25) which is connected in turn to the rolling tube (3) via fastening means, **characterized in that** the axial stop (23) for the control element (17) is formed by at least one radially movable element (35).

2. Pneumatic spring according to Claim 1, **characterized in that** the control element (17) has at least one radially elastic hook-shaped stop (35).

3. Pneumatic spring according to Claim 2, **characterized in that** the hook-shaped stop (35) of the control element (17) is cut free out of the surface area of its tubular body (31).

4. Pneumatic spring according to Claim 1, **characterized in that** the force transmission component (19) and the control element (17) are formed in one piece.

## Revendications

1. Ressort pneumatique (1) comprenant une soupape de commande intégrée (27), comprenant un tube déroulant (3) sur lequel est fixé un soufflet roulant (5), le tube déroulant (3) recevant un élément de commande (17) déplaçable axialement, qui présente à l'une de ses extrémités un composant de transfert de force (19) et à son autre extrémité une butée axiale (23) pour limiter le mouvement axial, la butée axiale (23) s'appuyant sur un boîtier annulaire (25) qui est à son tour connecté par le biais de moyens de fixation au tube déroulant (3),
**caractérisé en ce que**
la butée axiale (23) pour l'élément de commande (17) est formée par au moins un élément (35) déplaçable radialement.

2. Ressort pneumatique selon la revendication 1,
**caractérisé en ce que**
l'élément de commande (17) présente au moins une butée (35) en forme de crochet radialement élastique.

3. Ressort pneumatique selon la revendication 2,
**caractérisé en ce que**
la butée (35) en forme de crochet de l'élément de commande (17) est en contre-dépouille dans la surface d'enveloppe de son corps tubulaire (31).

4. Ressort pneumatique selon la revendication 1,
**caractérisé en ce que**
le composant de transfert de force (19) et l'élément de commande (17) sont réalisés d'une seule pièce.
